# EUROPÄISCHE PATENTSCHRIFT

(11) **EP 3 836 489 B1**
(45) Veröffentlichungstag und Bekanntmachung des Hinweises auf die Patenterteilung: **27.09.2023**
(21) Anmeldenummer: 19214476.4
(22) Anmeldetag: 09.12.2019
(51) Int. Cl.: H04L 12/46

(54) **DYNAMISCHE ZUORDNUNG VON AUTOMATISIERUNGSEINHEITEN ZU AUTOMATISIERUNGSSERVERN**
DYNAMIC ALLOCATION OF AUTOMATION UNITS TO AUTOMATION SERVERS
ATTRIBUTION DYNAMIQUE D'UNITÉS D'AUTOMATISATION AUX SERVEURS D'AUTOMATISATION

(43) Veröffentlichungstag der Anmeldung: 16.06.2021
(73) Patentinhaber: Siemens Aktiengesellschaft, 80333 München (DE)
(72) Erfinder: Lutz, Benjamin, 76327 Pfinztal (DE); Palmin, Anna, 76187 Karlsruhe (DE)
(74) Vertreter: Siemens Patent Attorneys

(56) Entgegenhaltungen:
- EP-A1- 3 462 313
- WO-A1-2017/145006
- DE-A1-102016 015 766
- CHRISTIDIS KONSTANTINOS ET AL: "Blockchains and Smart Contracts for the Internet of Things", IEEE ACCESS, Bd. 4, 10. Mai 2016 (2016-05-10), Seiten 2292-2303, XP011613134, DOI: 10.1109/ACCESS.2016.2566339 [gefunden am 2016-06-03]

## Beschreibung

Die vorliegende Erfindung geht aus von einem Betriebsverfahren für ein Automatisierungssystem,
- wobei das Automatisierungssystem zumindest eine Automatisierungseinheit und mehrere Automatisierungsserver umfasst,
- wobei die Automatisierungsserver über ein Kommunikationsnetz mit der Automatisierungseinheit verbunden sind,
- wobei die Automatisierungsserver mit der Automatisierungseinheit unter Verwendung eines ihnen mitgeteilten Zertifikats der Automatisierungseinheit kommunizieren,
- wobei die Automatisierungsserver vor dem Kommunizieren mit der Automatisierungseinheit das Zertifikat der Automatisierungseinheit validieren,
- wobei die Automatisierungseinheit einen Anlagenteil einer industriellen technischen Anlage entsprechend der Kommunikation mit dem jeweiligen Automatisierungsserver steuert,
- wobei die Automatisierungsserver zur Validierung des Zertifikats zum einen eine Vertrauenskette des Zertifikats prüfen und zum anderen durch Zugriff auf eine Sperrliste eine Gültigkeit des Zertifikats prüfen,
- wobei die Sperrliste an einem Speicherort gespeichert ist und ein Verweis auf den Speicherort in dem mitgeteilten Zertifikat enthalten ist.

Die vorliegende Erfindung geht weiterhin aus von einem Automatisierungssystem,
- wobei das Automatisierungssystem zumindest eine Automatisierungseinheit und mehrere Automatisierungsserver umfasst,
- wobei die Automatisierungsserver über ein Kommunikationsnetz mit der Automatisierungseinheit verbunden sind,
- wobei die Automatisierungsserver derart programmiert sind, dass sie mit der Automatisierungseinheit unter Verwendung eines ihnen mitgeteilten Zertifikats der Automatisierungseinheit kommunizieren und vor dem Kommunizieren mit der Automatisierungseinheit das Zertifikat der Automatisierungseinheit validieren,
- wobei die Automatisierungseinheit derart programmiert ist, dass sie einen Anlagenteil einer industriellen technischen Anlage entsprechend der Kommunikation mit dem jeweiligen Automatisierungsserver steuert,
- wobei die Automatisierungsserver weiterhin derart programmiert sind, dass sie zur Validierung des Zertifikats zum einen eine Vertrauenskette des Zertifikats prüfen und zum anderen durch Zugriff auf eine Sperrliste eine Gültigkeit des Zertifikats prüfen,
- wobei die Sperrliste an einem Speicherort gespeichert ist und ein Verweis auf den Speicherort in dem mitgeteilten Zertifikat enthalten ist.

In industriellen Anlagen der Verfahrenstechnik werden mehr und mehr Flexibilität und Skalierbarkeit gefordert. Dies führt dazu, dass Anlagenteile als kleine Einheiten separat entwickelt und hergestellt werden. Diese Einheiten werden insbesondere in der pharmazeutischen Industrie oftmals als Package units bezeichnet. Der jeweilige Anlagenteil wird von einer Automatisierungseinheit gesteuert, beispielsweise einer speicherprogrammierbaren Steuerung.

Mehrere Anlagenteile bilden in ihrer Gesamtheit eine industrielle Anlage. Die zugehörigen Automatisierungseinheiten werden von einem Automatisierungsserver gesteuert, der mit den Automatisierungseinheiten über ein Kommunikationsnetz (beispielsweise ein Ethernet) verbunden ist. Die Automatisierungseinheiten steuern ihren jeweiligen Anlagenteil entsprechend der Kommunikation mit dem jeweiligen Automatisierungsserver. Sie nehmen also von dem Automatisierungsserver die entsprechenden Steuerbefehle oder sonstigen Kommandos entgegen und liefern an den Automatisierungsserver Sensorsignale, daraus abgeleitete Signale oder interne Zustände der jeweiligen Automatisierungseinheit zurück.

Neben der Modularität des obenstehend skizzierten Ansatzes bieten sich weiterhin auch Vorteile bezüglich der dynamischen Zuordnung der einzelnen Anlagenteile zu einer bestimmten industriellen Anlage. Beispielsweise ist es möglich, dass ein bestimmter Anlagenteil anfänglich Bestandteil einer ersten industriellen Anlage ist und zu einem späteren Zeitpunkt aus der ersten industriellen Anlage ausgegliedert und einer zweiten industriellen Anlage zugeordnet wird.

Um nach einem Einsatz im Rahmen der ersten industriellen Anlage im Rahmen der zweiten industriellen Anlage eingesetzt zu werden, muss natürlich der Anlagenteil selbst aus der ersten industriellen Anlage ausgegliedert und in die zweite industrielle Anlage eingegliedert werden. Dieser Transfer als solcher - also der geometrisch-mechanisch-physikalische Transfer des Anlagenteils als solchem - ist nicht Gegenstand der vorliegenden Erfindung. Es muss aber auch gewährleistet werden, dass bis zum Ausgliedern aus der ersten industriellen Anlage vom Automatisierungsserver der ersten industriellen Anlage und nur von diesem Automatisierungsserver auf die entsprechende Automatisierungseinheit zugegriffen wird und ab dem Eingliedern in die zweite industrielle Anlage von dem Automatisierungsserver der zweiten industriellen Anlage und nur von diesem Automatisierungsserver auf die entsprechende Automatisierungseinheit zugegriffen wird. Es muss also zusätzlich zum geometrisch-mechanisch-physikalischen Transfer des Anlagenteils auch der zugehörige kommunikationstechnische Transfer der zugehörigen Automatisierungseinheit erfolgen.

Im Stand der Technik wird zum kommunikationstechnischen Transfer das Engineering der beiden betroffenen Automatisierungsserver geändert. Das jeweilige Engineering enthält Parametrierungen, die angeben, welche Anlagenteile (genauer: aus Sicht des jeweiligen Automatisierungsservers welche Automatisierungseinheiten) vorhanden sein müssen, um die jeweilige Automatisierungsaufgabe auszuführen. Das Engineering enthält auch Informationen zu Kommunikationswegen für die jeweiligen Automatisierungseinheiten.

Diese Vorgehensweise ist umständlich, zeitaufwendig und fehlerträchtig. Sie ist umständlich und zeitaufwendig, weil sowohl für den Automatisierungsserver der ersten industriellen Anlage als auch für den Automatisierungsserver der zweiten industriellen Anlage jeweils das Engineering geändert und in den jeweiligen Automatisierungsserver geladen werden muss. Sie ist fehlerträchtig, weil sowohl das Engineering als solches fehlerhaft sein kann als auch Fehler bei der Abfolge gemacht werden können. Insbesondere kann es geschehen, dass die Automatisierungseinheit eines bestimmten Anlagenteils zu einem Zeitpunkt dem Automatisierungsserver der zweiten industriellen Anlage zugeordnet wird, zu dem die Automatisierungseinheit auch noch dem Automatisierungsserver der ersten industriellen Anlage zugeordnet ist. In diesem Fall konkurrieren die beiden Automatisierungsserver miteinander. Wenn umgekehrt gewährleistet ist, dass die Automatisierungseinheit des Anlagenteils zunächst bei dem ersten Automatisierungsserver ausgegliedert wird und erst danach bei dem zweiten Automatisierungsserver eingegliedert wird, vergeht zwischen dem Ausgliedern beim einen Automatisierungsserver und dem Eingliedern beim anderen Automatisierungsserver eine relativ große Zeitspanne, während derer der zugehörige Anlagenteil nicht genutzt werden kann. Die Produktivität wird daher verringert.

In der WO 2017/145006 A1 sind Implementierungen der Blockchain-Technologie beschrieben, die beispielsweise für Prozessleitsysteme verwendet werden können.

Die Aufgabe der vorliegenden Erfindung besteht darin, den kommunikationstechnischen Transfer einer Automatisierungseinheit - also das Ausgliedern bei einem Automatisierungsserver und dem Eingliedern bei einem anderen Automatisierungsserver - einfach und effizient zu gestalten.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 und 3.

Erfindungsgemäß wird ein Betriebsverfahren der eingangs genannten Art dadurch ausgestaltet,
- dass das Automatisierungssystem zusätzlich eine zentrale Verwaltungseinheit umfasst, die über das Kommunikationsnetz mit den Automatisierungsservern und der Automatisierungseinheit verbunden ist,
- dass die zentrale Verwaltungseinheit zum Ermöglichen der Kommunikation des jeweiligen Automatisierungsservers mit der Automatisierungseinheit dem jeweiligen Automatisierungsserver die jeweilige Vertrauenskette mitteilt,
- dass die zentrale Verwaltungseinheit zum Unterbinden der Kommunikation eines jeweiligen Automatisierungsservers mit der Automatisierungseinheit dem jeweiligen Automatisierungsserver die jeweilige Vertrauenskette entzieht oder ein Eintragen des Zertifikats der Automatisierungseinheit in die Sperrliste veranlasst und
- dass die zentrale Verwaltungseinheit einem jeweiligen Automatisierungsserver die jeweilige Vertrauenskette nur dann mitteilt, wenn sie zuvor allen anderen Automatisierungsservern zur Kommunikation mit der Automatisierungseinheit bestimmte Vertrauensketten entzogen hat oder das Eintragen eines bis zu diesem Zeitpunkt gültigen Zertifikats der Automatisierungseinheit in die Sperrliste veranlasst hat oder das Zertifikat der Automatisierungseinheit anderweitig ungültig ist.

Die vorliegende Erfindung beruht auf der Erkenntnis, dass die Kommunikation zwischen dem jeweiligen Automatisierungsserver und der Automatisierungseinheit unter Verwendung sicherer Kommunikationsprotokolle erfolgt, die Zertifikate gemäß dem X.509-Standard verwenden. Beispiele derartiger Protokolle sind OPC, UA, TLS und andere mehr. Im Rahmen des X.509-Standards werden die genannten Zertifikate definiert. Eine Kommunikation einer Einheit mit einem Kommunikationspartner aber erfolgt nur, wenn die Einheit das Zertifikat ihres Kommunikationspartners nicht nur erhalten hat, sondern sie das erhaltene Zertifikat durch die zugehörige Vertrauenskette auch validieren kann und das Zertifikat nicht in die Sperrliste eingetragen ist oder anderweitig ungültig ist. Eine anderweitige Ungültigkeit kann beispielsweise durch Zeitablauf entstehen, da Zertifikate üblicherweise nur für einen begrenzten Zeitraum gültig sind.

Die zentrale Verwaltungseinheit sorgt also dafür, dass ein Automatisierungsserver ein Zertifikat erst dann verwenden kann, wenn sichergestellt ist, dass kein anderer Automatisierungsserver ein gültiges, nicht gesperrtes Zertifikat und dessen zugehörige Vertrauenskette hat. Solange diese Gefahr besteht, wird das Zertifikat dem entsprechenden (neuen) Automatisierungsserver nicht mitgeteilt. Im Einzelfall kann dies temporär auch den Zustand mit umfassen, dass die zur Kommunikation mit derselben Automatisierungseinheit erforderlichen Daten keinem einzigen Automatisierungsserver zur Verfügung stehen. Keinesfalls aber kann der Fall auftreten, dass die zur Kommunikation mit derselben Automatisierungseinheit erforderlichen Daten mehr als einem Automatisierungsserver zur Verfügung stehen.

Durch diese Vorgehensweise ist es möglich, dass das Engineering der Automatisierungsserver nur einmal erstellt und danach nicht mehr geändert wird. Im Ergebnis bedeutet dies, dass die Automatisierungsserver anhand einer jeweiligen Parametrierung ermitteln, ob sie zur Ausführung einer für sie spezifischen Automatisierungsaufgabe mit der Automatisierungseinheit kommunizieren müssen, dass die Parametrierung der Automatisierungsserver jedoch unabhängig von der Mitteilung und dem Entzug von Vertrauensketten und dem Sperren von Zertifikaten erfolgt.

Zur Zuordnung von Anlagenteilen bzw. den zugehörigen Automatisierungseinheiten zu einem bestimmten Automatisierungsserver kann insbesondere derart vorgegangen werden,
- dass zum Erhalten einer jeweiligen Vertrauenskette der jeweilige Automatisierungsserver die Zuordnung der Automatisierungseinheit bei der zentralen Verwaltungseinheit anfordert und
- dass die zentrale Verwaltungseinheit aufgrund der Anforderung den Entzug der Vertrauenskette eines einem anderen Automatisierungsserver mitgeteilten Zertifikats der Automatisierungseinheit vornimmt oder das Sperren eines einem anderen Automatisierungsserver mitgeteilten Zertifikats der Automatisierungseinheit veranlasst und die Mitteilung der jeweiligen Vertrauenskette an den anfordernden Automatisierungsserver vornimmt.

Alle Automatisierungsserver können somit zwar dauerhaft die Information haben, welche Anlagenteile (genauer: aus Sicht des jeweiligen Automatisierungsservers welche Automatisierungseinheiten) vorhanden sein müssen, um die jeweilige Automatisierungsaufgabe auszuführen. Dies kann die Situation mit umfassen, dass bestimmte Anlagenteile und die zugehörigen Automatisierungseinheiten im Rahmen des Engineering (bzw. der Parametrierungen) mehrfach verwendet werden. Dadurch, dass die zentrale Verwaltungseinheit dafür sorgt, dass zu einem bestimmten Zeitpunkt maximal ein einziger Automatisierungsserver auf eine bestimmte Automatisierungseinheit zugreifen kann, werden Zugriffskonflikte jedoch vermieden. Im Ergebnis gibt also die zentrale Verwaltungseinheit den Zugriff des jeweiligen Automatisierungsservers auf eine bestimmte Automatisierungseinheit bei Bedarf frei und sperrt ihn bei Bedarf auch wieder.

Die Aufgabe wird weiterhin durch ein Automatisierungssystem mit den Merkmalen des Anspruchs 4 gelöst. Vorteilhafte Ausgestaltungen des Automatisierungssystems sind Gegenstand der abhängigen Ansprüche 5 und 6.

Erfindungsgemäß wird ein Automatisierungssystem der eingangs genannten Art dadurch ausgestaltet,
- dass das Automatisierungssystem zusätzlich eine zentrale Verwaltungseinheit umfasst, die über das Kommunikationsnetz mit den Automatisierungsservern und der Automatisierungseinheit verbunden ist,
- dass die zentrale Verwaltungseinheit derart programmiert ist, dass sie
   -- zum Ermöglichen der Kommunikation des jeweiligen Automatisierungsservers mit der Automatisierungseinheit dem jeweiligen Automatisierungsserver die jeweilige Vertrauenskette mitteilt,
   -- zum Unterbinden der Kommunikation eines jeweiligen Automatisierungsservers mit der Automatisierungseinheit dem jeweiligen Automatisierungsserver die jeweilige Vertrauenskette entzieht oder ein Eintragen des Zertifikats der Automatisierungseinheit in die Sperrliste veranlasst und
   -- einem jeweiligen Automatisierungsserver die jeweilige Vertrauenskette nur dann mitteilt, wenn sie zuvor allen anderen Automatisierungsservern zur Kommunikation mit der Automatisierungseinheit bestimmte Vertrauensketten entzogen hat oder das Eintragen eines bis zu diesem Zeitpunkt gültigen Zertifikats der Automatisierungseinheit in die Sperrliste veranlasst hat oder das Zertifikat der Automatisierungseinheit anderweitig ungültig ist.

Die vorteilhaften Ausgestaltungen des Automatisierungssystem und die hierdurch erzielten Vorteile korrespondieren mit denen des Betriebsverfahrens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine industrielle technische Anlage und deren Automatisierungsstruktur,
- FIG 2: ein Zertifikat,
- FIG 3: eine Sperrliste,
- FIG 4: ein Ablaufdiagramm,
- FIG 5: ein Ablaufdiagramm,
- FIG 6: eine Modifikation der industriellen technischen Anlage von FIG 1 und deren Automatisierungsstruktur,
- FIG 7: ein Ablaufdiagramm und
- FIG 8: ein Ablaufdiagramm.

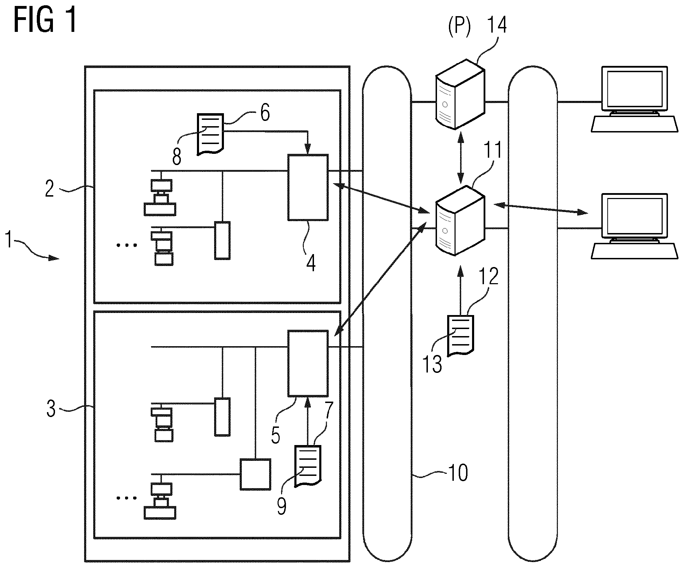

In vielen Fällen - beispielsweise in der pharmazeutischen Industrie - besteht eine industrielle technische Anlage 1 entsprechend der Darstellung in FIG 1 aus mehreren Anlagenteilen 2, 3. Die Anlagenteile 2, 3 - in der Praxis oftmals als Package units bezeichnet - werden jeweils von einer Automatisierungseinheit 4, 5 gesteuert. Die Automatisierungseinheiten 4, 5 können beispielsweise speicherprogrammierbare Steuerungen sein. Unabhängig von der konkreten Ausgestaltung wird die Wirkungsweise der Automatisierungseinheiten 4, 5 jedoch durch ein entsprechendes Programm 6, 7 bestimmt, mit dem die jeweilige Automatisierungseinheit 4, 5 programmiert ist. Die Programme 6, 7 umfassen Maschinencode 8, 9, der von der jeweiligen Automatisierungseinheit 4, 5 abarbeitbar ist. Die nachstehend erläuterten Funktionen und Aktionen der Automatisierungseinheiten 4, 5 erfolgen also unter Abarbeitung und aufgrund der Abarbeitung des entsprechenden Maschinencodes 8, 9 durch die jeweilige Automatisierungseinheit 4, 5.

Die Anlagenteile 2, 3 wirken zusammen. Zu diesem Zweck kommunizieren die Automatisierungseinheiten 4, 5 über ein Kommunikationsnetz 10 mit einem Automatisierungsserver 11. Der Automatisierungsserver 11 steuert über die Automatisierungseinheit 4, 5 die industrielle technische Anlage 1. Insbesondere koordiniert der Automatisierungsserver 11 auch die Automatisierungseinheiten 4, 5 und damit auch die Anlagenteile 2, 3. Die Wirkungsweise des Automatisierungsservers 11 wird durch ein entsprechendes Programm 12 bestimmt, mit dem der Automatisierungsserver 11 programmiert ist. Das Programm 12 umfasst Maschinencode 13, der von dem Automatisierungsserver 11 abarbeitbar ist. Die nachstehend erläuterten Funktionen und Aktionen des Automatisierungsservers 11 erfolgen also unter Abarbeitung und aufgrund der Abarbeitung des entsprechenden Maschinencodes 13 durch den Automatisierungsserver 11.

Der Automatisierungsserver 11 ermittelt anhand einer Parametrierung P, welche Automatisierungseinheiten 4, 5 vorhanden sein müssen und mit denen der Automatisierungsserver 11 demzufolge auch kommunizieren können muss, um die richtigen Informationen mit den Automatisierungseinheiten 4, 5 auszutauschen, so dass die Automatisierungseinheiten 4, 5 ihre jeweilige automatisierungstechnische Teilaufgabe erfüllen können und der Automatisierungsserver 11 seine automatisierungstechnische Gesamtaufgabe erfüllen kann. Die Parametrierung P kann beispielsweise in einem Engineering-Server 14 hinterlegt sein, auf den der Automatisierungsserver 11 Zugriff hat.

Die Kommunikation zwischen den Automatisierungseinheiten 4, 5 und dem Automatisierungsservern 11 erfolgt gemäß einem sicheren Protokoll, das Zertifikate Z nach dem X.509-Standard (Stand Oktober 2016) verwendet. "Sicher" bedeutet, dass ein asymmetrisches Verschlüsselungsverfahren verwendet wird und im Rahmen der Erstellung und Verwertung der übermittelten Nachrichten, also im Rahmen der gesamten Kommunikation, Zertifikate Z der Automatisierungseinheiten 4, 5 verwendet werden.

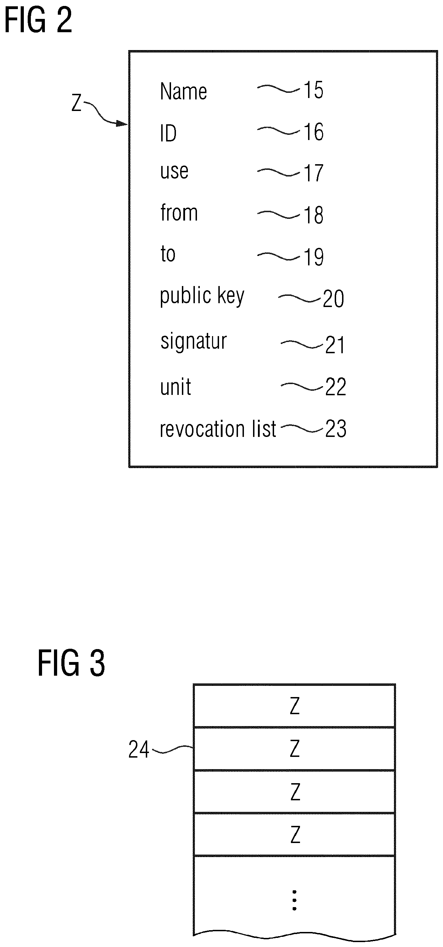

Nachfolgend wird in Verbindung mit FIG 2 der typische Aufbau eines Zertifikats Z nach dem X.509-Standard erläutert. Dieser Aufbau gilt sowohl für die Zertifikate Z der Automatisierungseinheiten 4, 5 als auch für Zertifikate Z anderer Einheiten.

Gemäß FIG 2 weist ein Zertifikat Z üblicherweise den Namen 15 und einen Identifikator 16 auf, die auf diejenige Einheit bezogen sind, der das Zertifikat Z zugeordnet ist. Die Einheit kann beispielsweise im Rahmen der vorliegenden Erfindung eine der Automatisierungseinheiten 4, 5 sein. Weiterhin weist das Zertifikat Z üblicherweise in Klartext oder in codierter Form eine Angabe 17 über den Verwendungszweck des Zertifikats Z auf, beispielsweise dass es zur Kommunikation dient oder zur Autorisierung anderer Zertifikate 2. Weiterhin weist das Zertifikat Z üblicherweise einen frühesten und einen spätesten Zeitpunkt 18, 19 auf. Zwischen dem frühesten Zeitpunkt 18 und dem spätesten Zeitpunkt 19 ist das Zertifikat Z gültig, zu allen anderen Zeiten ist es ungültig. Weiterhin enthält das Zertifikat Z den öffentlichen Schlüssel 20 (public key) eines asymmetrischen Verschlüsselungsverfahrens. Dieser öffentliche Schlüssel 20 kann beispielsweise verwendet werden, um Nachrichten zu verschlüsseln, welche für diejenige Einheit bestimmt sind, der das Zertifikat Z zugeordnet ist. Der öffentliche Schlüssel 20 kann auch dazu verwendet werden, um bei Nachrichten, die von der Einheit erstellt worden sind, der das Zertifikat Z zugeordnet ist, die Gültigkeit der Signatur zu überprüfen. Neben diesen Zwecken gibt es auch noch andere Zwecke, zu denen der öffentliche Schlüssel 20 verwendet werden kann. Weiterhin enthält das Zertifikat Z eine Signatur 21 derjenigen Einheit, welche das Zertifikat Z erstellt hat.

Durch ein Zertifikat Z wird der Zusammenhang zwischen dem privaten Schlüssel der Einheit, der das Zertifikat Z zugeordnet ist, (und somit deren Identität) und dem öffentlichen Schlüssel 20 manifestiert. Damit das Zertifikat Z nachweisbar vertrauenswürdig ist, soll es von einer vertrauenswürdigen Einheit signiert sein, wobei die Vertrauenswürdigkeit dieser Einheit nach Möglichkeit nachweisbar sein sollte. Um dies zu gewährleisten, wird die Signatur 21 von der Einheit, welche das Zertifikat Z erstellt hat, mit ihrem privaten (oder geheimen) Schlüssel (secret key) erstellt. Dieser private Schlüssel ist nicht das Gegenstück zu dem öffentlichen Schlüssel 20 des Zertifikats Z, sondern ein anderer Schlüssel. Anhand der Signatur 21 kann überprüft werden, dass der in dem Zertifikat Z enthaltene öffentliche Schlüssel 20 ordnungsgemäß ist. Der zugehörige öffentliche Schlüssel zum Entschlüsseln der Signatur 21 ist in der Regel im Zertifikat Z der Einheit mit aufgeführt, die das Zertifikat Z erstellt hat. Dieser öffentliche Schlüssel kann dazu verwendet werden, zu prüfen, ob die genannte Einheit vertrauenswürdig ist. Weiterhin enthält das Zertifikat Z eine Angabe 22 der Einheit, welche das Zertifikat Z erstellt hat. Schließlich enthält das Zertifikat Z einen Verweis 23 auf einen Speicherort einer Sperrliste 24 (siehe FIG 3). In der Sperrliste 24 sind gemäß FIG 3 Zertifikate Z hinterlegt, die gesperrt wurden und daher nicht mehr gültig sind.

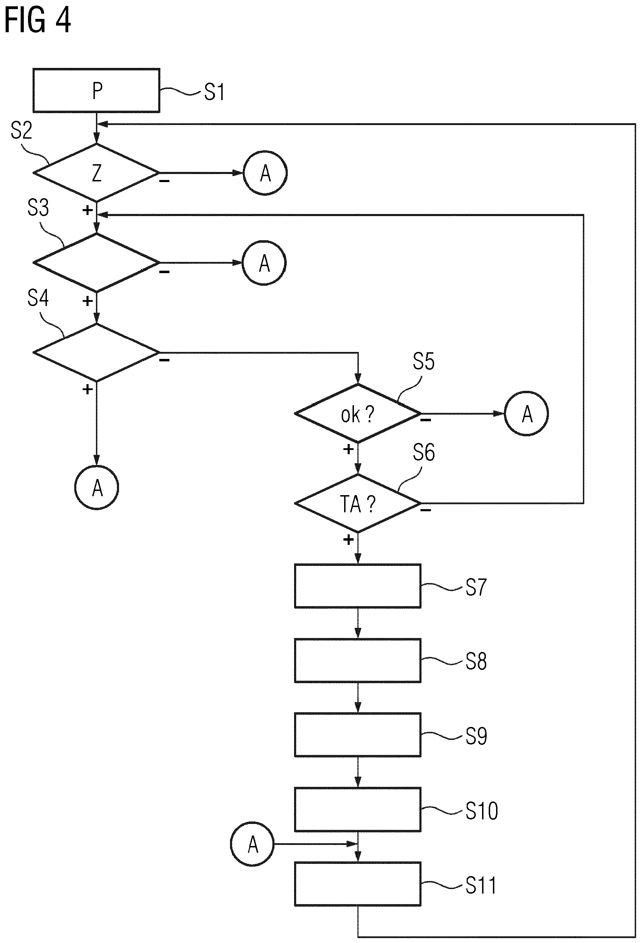

Konkret führt der Automatisierungsserver 11 zum Realisieren der Kommunikation mit beispielsweise der Automatisierungseinheit 5 ein Betriebsverfahren aus, das nachstehend in Verbindung mit FIG 4 näher erläutert wird.

Gemäß FIG 4 wird dem Automatisierungsserver 11 in einem Schritt S1 eine Parametrierung P bekannt. Beispielsweise kann der Automatisierungsserver 11 im Schritt S1 auf den Engineering-Server 14 zugreifen und dort die Parametrierung P auslesen.

In einem Schritt S2 prüft der Automatisierungsserver 11, ob ihm ein Zertifikat Z der Automatisierungseinheit 5 vorliegt, also ein Zertifikat Z, das der Automatisierungseinheit 5 zugeordnet ist. Alternativ kann der Automatisierungsserver 11 einen Kommunikationsvorgang mit der Automatisierungseinheit 5 beginnen (d.h. eine sogenannte Session aufbauen), indem er sein eigenes Zertifikat Z an die Automatisierungseinheit 5 sendet und daraufhin von der Automatisierungseinheit 5 deren Zertifikat Z zugeschickt bekommt.

Wenn dem Automatisierungsserver 11 das Zertifikat Z der Automatisierungseinheit 5 zur Verfügung steht, geht der Automatisierungsserver 11 zu einem Schritt S3 über. Im Schritt S3 prüft der Automatisierungsserver 11, ob das im Schritt S2 aufgefundene oder erhaltene Zertifikat Z gültig ist. Die Prüfungen des Schrittes S3 erfolgen anhand des Zertifikats Z als solchem, also ohne Verwertung anderer Informationen als der Informationen, die im Zertifikat Z selbst enthalten sind.

Beispielsweise kann der Automatisierungsserver 11 im Schritt S3 prüfen, ob der Zeitpunkt, zu dem der Automatisierungsserver 11 den Schritt S3 ausführt, innerhalb des Gültigkeitszeitraums des Zertifikats Z liegt, also zwischen dem frühesten Zeitpunkt 18 und dem spätesten Zeitpunkt 19.

Ist das Zertifikat Z gültig, geht der Automatisierungsserver 11 zu einem Schritt S4 über. Im Schritt S4 prüft der Automatisierungsserver 11, ob das im Schritt S2 aufgefundene Zertifikat Z gesperrt wurde. Der Automatisierungsserver 11 greift hierzu auf die Sperrliste 24 zu. Der Zugriff ist möglich, da im Zertifikat Z selbst die Information enthalten ist, an welchem Speicherort die Sperrliste 24 gespeichert ist.

Ist das Zertifikat Z nicht gesperrt, geht der Automatisierungsserver 11 zu einem Schritt S5 über. Im Schritt S5 prüft der Automatisierungsserver 11, ob die Signatur 21 ordnungsgemäß ist. Hierzu benötigt der Automatisierungsserver 11 den öffentlichen Schlüssel 20 und damit im Ergebnis das Zertifikat Z derjenigen Einheit, welche das im Schritt S2 aufgefundene oder erhaltene und in den Schritten S3 und S4 geprüfte Zertifikat Z erstellt hat. Ist dieses Zertifikat Z - also das Zertifikat Z derjenigen Einheit, welche das in den Schritten S3 und S4 geprüfte Zertifikat Z erstellt hat - vorhanden und ergibt die Prüfung, dass die Signatur 21 ordnungsgemäß ist, so geht der Automatisierungsserver 11 zu einem Schritt S6 über.

Im Schritt S6 prüft der Automatisierungsserver 11, ob diejenige Einheit, die das in den Schritten S3 bis S5 geprüfte Zertifikat Z erstellt hat, ein sogenannter Vertrauensanker (trust anchor) ist. Wenn dies nicht der Fall ist, geht der Automatisierungsserver 11 zum Schritt S3 zurück. Nunmehr führt der Automatisierungsserver 11 die Schritte S3 bis S6 jedoch bezüglich des Zertifikats Z derjenigen Einheit durch, die das bei der unmittelbar vorherigen Ausführung der Schritte S3 bis S5 geprüfte Zertifikat Z erstellt hat. Im Ergebnis validiert der Automatisierungsserver 11 durch die wiederholte Ausführung der Schritte S3 bis S6 somit die Vertrauenskette.

Die Abfolge der Schritte S3 bis S6 beruht auf der Überlegung, dass das ursprünglich geprüfte Zertifikat Z in der Regel von einer übergeordneten Einheit ausgestellt und signiert ist. Die übergeordnete Einheit wird in der Regel als Certification Authority (CA) bezeichnet. Das Zertifikat Z der Certification Authority ist seinerseits wiederum von einer weiteren übergeordneten Einheit bzw. Certification Authority ausgestellt und signiert. Irgendwann ist man aber am Ende dieser Kette angelangt. Dann liegt ein Zertifikat Z vor, das von der jeweiligen Einheit selbst signiert ist. Bei dieser Einheit handelt es sich um die sogenannte Root Certification Authority (RCA), die der sogenannte Vertrauensanker (Trust Anchor) ist.

Der Automatisierungsserver 11 führt die Schritte S3 bis S6 also immer wieder aus, bis ihm entweder die für die Validierung eines Zertifikats Z notwendige Vertrauenskette nicht vorliegt oder ein Zertifikat Z ungültig oder gesperrt ist oder er bei einem Zertifikat Z angelangt ist, das gültig, nicht gesperrt und von der Einheit, der das Zertifikat Z zugeordnet ist, selbst signiert ist. Diese Kette von Zertifikaten Z bis zu einem von dem Vertrauensanker ausgestellten Zertifikat Z bildet die Vertrauenskette (trust chain).

Wenn der Automatisierungsserver 11 im Schritt S6 erkennt, dass das bei der vorherigen Ausführung der Schritte S3 bis S5 geprüfte Zertifikat Z von dem Vertrauensanker erstellt ist, so impliziert dies, dass dem Automatisierungsserver 11 alle bei der wiederholten Ausführung der Schritte S3 bis S6 geprüften Zertifikate Z vorliegen, dass alle diese Zertifikate Z gültig und ordnungsgemäß signiert sind und dass keines der Zertifikate Z gesperrt ist. Auch das Zertifikat Z der Automatisierungseinheit 5 ist damit gültig.

Nur in diesem Fall geht der Automatisierungsserver 11 zu Schritten S7 bis S10 über. Im Schritt S7 verschlüsselt der Automatisierungsserver 11 Daten, die an die Automatisierungseinheit 5 übermittelt werden sollen, mit dem öffentlichen Schlüssel 20, der im Zertifikat Z der Automatisierungseinheit 5 enthalten ist. Weiterhin signiert der Automatisierungsserver 11 die Daten im Schritt S7. Im Schritt S8 übermittelt der Automatisierungsserver 11 die im Schritt S7 verschlüsselten und signierten Daten an die Automatisierungseinheit 5. Im Schritt S9 nimmt der Automatisierungsserver 11 von der Automatisierungseinheit 5 verschlüsselte Daten entgegen. Die verschlüsselten Daten entschlüsselt der Automatisierungsserver 11 im Schritt S10 mit dem öffentlichen Schlüssel 20, der im Zertifikat Z der Automatisierungseinheit 5 enthalten ist. Gegebenenfalls überprüft er auch eine Signatur.

Nach der Ausführung des Schrittes S10 geht der Automatisierungsserver 11 zu einem Schritt S11 über. Im Schritt S11 führt der Automatisierungsserver 11 andere Aufgaben aus. Die anderen Aufgaben können - nicht aber müssen - mit umfassen, dass der Automatisierungsserver 11 neue Zertifikate Z entgegennimmt oder dass ihm Zertifikate Z entzogen werden, so dass sie ihm nicht mehr vorliegen. In allen anderen Fällen, also sobald der Automatisierungsserver 11 bei der Ausführung eines jeweiligen Schrittes S2 bis S6 feststellt, dass ihm das jeweilige Zertifikat Z nicht vorliegt oder dass ihm ein Zertifikat Z zwar vorliegt, das Zertifikat Z aber nicht gültig ist oder gesperrt ist oder dessen Signatur 21 nicht korrekt ist, geht der Automatisierungsserver 11 direkt, also ohne vorherige Ausführung der Schritte S7 bis S10, zum Schritt S11 über.

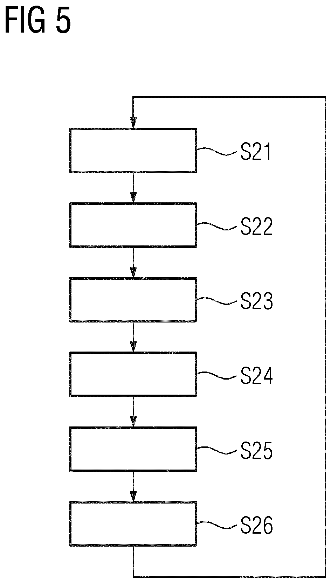

Die Automatisierungseinheit 5 führt eine korrespondierende Vorgehensweise aus. Dies wird nachstehend in Verbindung mit FIG 5 näher erläutert.

Gemäß FIG 5 nimmt die Automatisierungseinheit 5 in einem Schritt S21 von dem Automatisierungsserver 11 Daten entgegen. Der Schritt S21 ist das Gegenstück zum Schritt S8. Im Schritt S22 entschlüsselt die Automatisierungseinheit 5 die im Schritt S21 entgegengenommenen Daten. Diese Entschlüsselung erfolgt unter Verwendung des geheimen Schlüssels zum öffentlichen Schlüssel 20, der im Zertifikat Z der Automatisierungseinheit 5 enthalten ist. Weiterhin überprüft die Automatisierungseinheit 5 die Signatur der übermittelten Daten. Der geheime Schlüssel ist in der Regel nur innerhalb der Automatisierungseinheit 5 vorhanden. Der Schritt S22 ist das Gegenstück zum Schritt S7. Im Schritt S23 verschlüsselt die Automatisierungseinheit 5 Daten, die an den Automatisierungsserver 11 übermittelt werden sollen. Diese Verschlüsselung erfolgt unter Verwendung des geheimen Schlüssels zum öffentlichen Schlüssel 20, der im Zertifikat Z der Automatisierungseinheit 5 enthalten ist. Gegebenenfalls signiert die Automatisierungseinheit 5 die Daten. Der Schritt S23 ist das Gegenstück zum Schritt S10. Im Schritt S24 übermittelt die Automatisierungseinheit 5 die verschlüsselten Daten an den Automatisierungsserver 11. Der Schritt S24 ist das Gegenstück zum Schritt S9.

Sodann führt die Automatisierungseinheit 5 einen Schritt S25 aus. Im Schritt S25 steuert die Automatisierungseinheit 5 den Anlagenteil 3 entsprechend der Kommunikation mit dem Automatisierungsserver 11. Schließlich führt die Automatisierungseinheit 5 einen Schritt S26 aus. Im Schritt S26 führt die Automatisierungseinheit 5 andere Aufgaben aus. Die anderen Aufgaben können beliebiger Natur sein. Sie können im Einzelfall mit umfassen, dass die Automatisierungseinheit 5 Zertifikate Z entgegennimmt oder einen neuen geheimen Schlüssel erhält.

Die obenstehend erläuterte Vorgehensweise ist als solche bekannt.

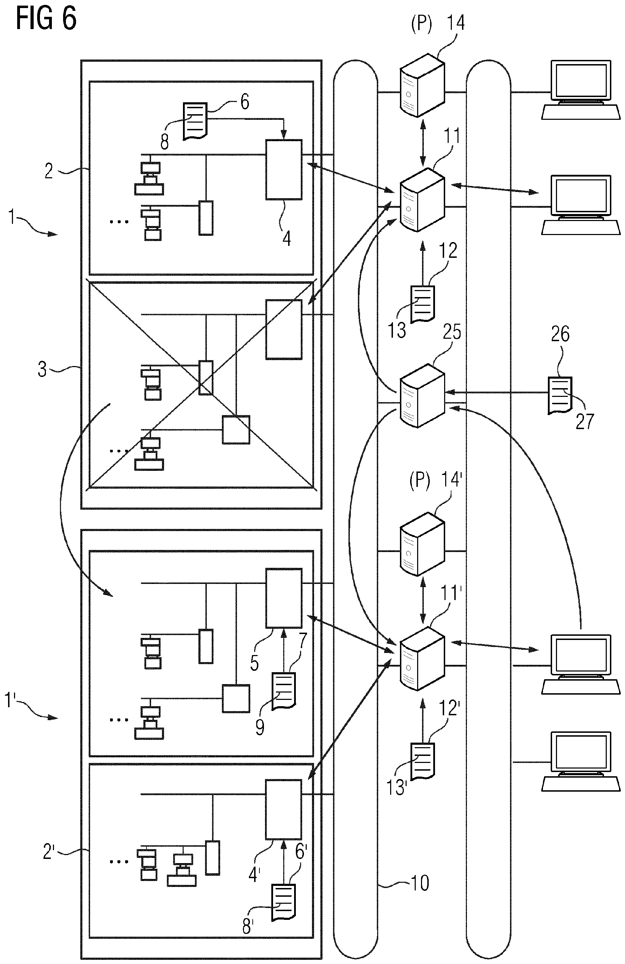

FIG 6 zeigt eine Erweiterung von FIG 1. Bei FIG 6 ist zusätzlich eine weitere industrielle technische Anlage 1' vorhanden, die von einem weiteren Automatisierungsserver 11' gesteuert wird. Die weitere industrielle technische Anlage 1' umfasst einen weiteren Anlagenteil 2', der von einer weiteren Automatisierungseinheit 4' gesteuert wird. Bestandteil der weiteren industriellen technischen Anlage 1' ist aber auch der Anlagenteil 3. Zur Steuerung der weiteren industriellen technischen Anlage 1' muss der weitere Automatisierungsserver 11' daher mit der weiteren Automatisierungseinheit 4' und der Automatisierungseinheit 5 kommunizieren.

Der Aufbau und die Wirkungsweise der industriellen technischen Anlage 1' können in automatisierungstechnischer Hinsicht mit dem Aufbau und der Wirkungsweise der industriellen technischen Anlage 1 korrespondieren. Insbesondere arbeitet der Automatisierungsserver 11' der weiteren industriellen technischen Anlage 1' auf die gleiche Art und Weise, wie dies obenstehend in Verbindung mit FIG 4 für den Automatisierungsserver 11 erläutert wurde. Aus dem gleichen Grund sind die weitere Automatisierungseinheit 4' und der weitere Automatisierungsserver 11' mit entsprechenden Programmen 6', 12' programmiert, wobei die Programme 6', 12' entsprechenden Maschinencode 8', 13' aufweisen, dessen Abarbeitung die jeweilige Wirkungsweise und Funktionalität der weiteren Automatisierungseinheit 4' und des weiteren Automatisierungsservers 11' bestimmt. Auch ist aus diesem Grund der weitere Engineering-Server 14' vorhanden, in dem die Parameter P' für den weiteren Automatisierungsserver 11' hinterlegt sind.

Die weitere industrielle technische Anlage 1' umfasst, wie bereits erwähnt, zusätzlich zu dem weiteren Anlagenteil 2' auch den Anlagenteil 3. Der weitere Automatisierungsserver 11' benötigt daher zur Steuerung der weiteren industriellen technischen Anlage 1' nicht nur einen Zugriff auf die weitere Automatisierungseinheit 4', sondern auch einen Zugriff auf die Automatisierungseinheit 5.

Nachfolgend wird angenommen, dass zunächst (so wie in FIG 1 dargestellt) die industrielle technische Anlage 1 von dem Automatisierungsserver 11 gesteuert wird und zu einem späteren Zeitpunkt die industrielle technische Anlage 1' von dem Automatisierungsserver 11' gesteuert werden soll. Demzufolge muss entsprechend der Darstellung in FIG 6 der Anlagenteil 3 von der industriellen technischen Anlage 1 zu der weiteren industriellen technischen Anlage 1' transferiert werden. Anfangs ist der Anlagenteil 3 also in die industrielle technische Anlage 1 eingebunden. Zu einem späteren Zeitpunkt soll er aus der industriellen technischen Anlage 1 herausgelöst und der industriellen technischen Anlage 1' zugeordnet werden. Die Zuordnung des Anlagenteils 3 kann also dynamisch variieren.

Zur Realisierung des Transfers muss natürlich der Anlagenteil 3 selbst von der industriellen technischen Anlage 1 zur industriellen technischen Anlage 1' transferiert werden. Der Transfer des Anlagenteils 3 als solcher ist nicht Gegenstand der vorliegenden Erfindung. Es muss aber auch gewährleistet werden, dass bis zum Transfer vom Automatisierungsserver 11 und nur vom Automatisierungsserver 11 auf die Automatisierungseinheit 5 zugegriffen werden kann und ab dem Transfer von dem Automatisierungsserver 11' und nur vom Automatisierungsserver 11' auf die Automatisierungseinheit 5 zugegriffen werden kann. Es muss also zusätzlich zum mechanisch-physikalischen Transfer des Anlagenteils 3 auch der kommunikationstechnische Transfer der zugehörigen Automatisierungseinheit 5 erfolgen.

Die Realisierung des kommunikationstechnischen Transfers ist Gegenstand der vorliegenden Erfindung. Die Realisierung baut auf der obenstehend in Verbindung mit den FIG 2 bis 5 erläuterten Art und Weise der Kommunikation auf. Erfindungsgemäß werden die Zertifikate Z der Automatisierungseinheit 5 so verwaltet, dass hierdurch der Zugriff des Automatisierungsservers 11 gezielt gesteuert wird.

Zunächst ist zusätzlich zum Automatisierungsserver 11 auch der Automatisierungsserver 11' über das Kommunikationsnetz 10 mit der Automatisierungseinheit 5 verbunden. Um einen einfachen kommunikationstechnischen Transfer der Automatisierungseinheit 5 zu ermöglichen, also die Zuordnung dahingehend abzuändern, dass die Automatisierungseinheit 5 nicht mehr dem Automatisierungsserver 11, sondern dem Automatisierungsserver 11' zugeordnet wird, umfasst das Automatisierungssystem zusätzlich eine zentrale Verwaltungseinheit 25. Die zentrale Verwaltungseinheit 25 ist über das Kommunikationsnetz 10 mit den Automatisierungsservern 11, 11' und der Automatisierungseinheit 5 verbunden. In der Regel besteht auch eine Verbindung zu den Automatisierungseinheiten 4, 4', die ausschließlich von der einen oder der anderen industriellen technischen Anlage 1, 1' genutzt werden. Dies ist jedoch von untergeordneter Bedeutung.

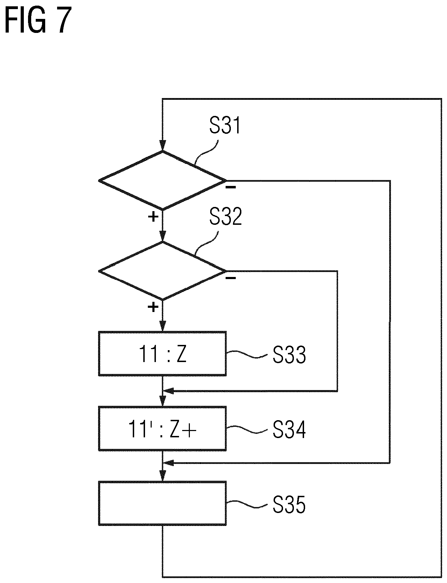

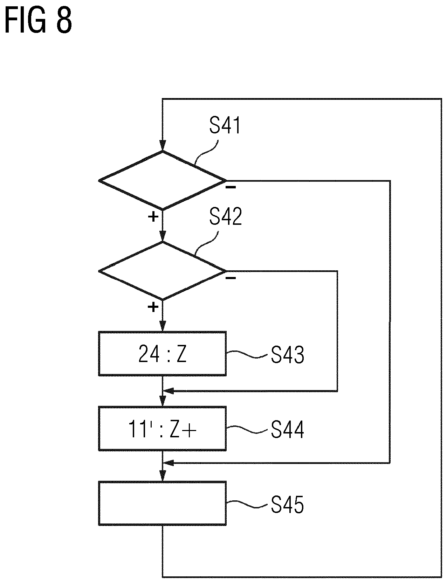

Die Wirkungsweise der zentralen Verwaltungseinheit 25 wird durch ein entsprechendes Programm 26 bestimmt, mit dem die zentrale Verwaltungseinheit 25 programmiert ist. Das Programm 26 umfasst Maschinencode 27, der von der zentralen Verwaltungseinheit 25 abarbeitbar ist. Die nachstehend erläuterten Funktionen und Aktionen der zentralen Verwaltungseinheit 25, also die Vorgehensweisen der FIG 7 und 8, erfolgen somit unter Abarbeitung und aufgrund der Abarbeitung des entsprechenden Maschinencodes 27 durch die Verwaltungseinheit 25. Weiterhin sei erwähnt, dass nachstehend der Transfer der Automatisierungseinheit 5 von der industriellen technischen Anlage 1 zur industriellen technischen Anlage 1' erläutert wird. Andere Transfers werden auf analoge Art und Weise realisiert.

Die zentrale Verwaltungseinheit 25 kann ein Betriebsverfahren ausführen, wie es nachstehend in Verbindung mit FIG 7 näher erläutert wird. Alternativ kann die zentrale Verwaltungseinheit 25 ein Betriebsverfahren ausführen, wie es nachstehend in Verbindung mit FIG 8 näher erläutert wird.

Gemäß FIG 7 prüft die zentrale Verwaltungseinheit 25 in einem Schritt S31, ob ein Ereignis eingetreten ist, aufgrund dessen die Automatisierungseinheit 5 aus der industriellen technischen Anlage 1 herausgelöst und der industriellen technischen Anlage 1' zugeordnet werden soll. Beispielsweise kann die zentrale Verwaltungseinheit 25 im Schritt S31 prüfen, ob sie vom Automatisierungsserver 11' eine entsprechende Anforderung für die Automatisierungseinheit 5 erhalten hat. Ist das Ereignis eingetreten, führt die zentrale Verwaltungseinheit 25 Schritte S32 bis S34 aus.

Im Schritt S32 prüft die zentrale Verwaltungseinheit 25, ob die Automatisierungseinheit 5 anderweitig vergeben ist, also beispielsweise dem Automatisierungsserver 11 zugewiesen ist. Wenn dies der Fall ist, geht die zentrale Verwaltungseinheit 25 zum Schritt S33 über. Im Schritt S33 entzieht die zentrale Verwaltungseinheit 25 dem Automatisierungsserver 11 das Zertifikat Z, das der Automatisierungseinheit 5 zugeordnet ist, also dasjenige Zertifikat Z, das den öffentlichen Schlüssel 20 der Automatisierungseinheit 5 enthält, den der Automatisierungsserver 11 zum Verschlüsseln und Entschlüsseln in den Schritten S7 und S10 verwendet. Der Automatisierungsserver 11 kann dadurch auf dieses Zertifikat Z nicht mehr zugreifen. Alternativ oder zusätzlich kann die zentrale Verwaltungseinheit 25 dem Automatisierungsserver 11 im Schritt S33 auch (mindestens) ein anderes Zertifikat Z entziehen, das der Automatisierungsserver 11 im Rahmen der Prüfung der Vertrauenskette (vergleiche die Schritte S2 bis S6 von FIG 4) verwendet. Insbesondere kann die zentrale Verwaltungseinheit 25 dem Automatisierungsserver 11 dasjenige Zertifikat Z entziehen, das ihren eigenen öffentlichen Schlüssel 20 enthält, also den öffentlichen Schlüssel 20 der zentralen Verwaltungseinheit 25. In beiden Fällen wird dadurch die Vertrauenskette unterbrochen und somit im Ergebnis ungültig.

Sodann geht die zentrale Verwaltungseinheit 25 zum Schritt S34 über. Im Schritt S34 teilt die zentrale Verwaltungseinheit 25 dem Automatisierungsserver 11' die entsprechende Vertrauenskette (oder fehlende Teile der Vertrauenskette) mit. Insbesondere übermittelt die zentrale Verwaltungseinheit 25 im Schritt S34 mindestens eines der Zertifikate Z, welche der weitere Automatisierungsserver 11' im Rahmen der Prüfung der Vertrauenskette verwertet (vergleiche wieder die Schritte S2 bis S6 von FIG 4, die in analoger Weise auch vom Automatisierungsserver 11' ausgeführt werden). Durch die Mitteilung der Vertrauenskette, die für die Validierung des Zertifikats Z der Automatisierungseinheit 5 erforderlich ist, wird somit die Kommunikation des weiteren Automatisierungsservers 11' mit der Automatisierungseinheit 5 ermöglicht. Beispielsweise kann die zentrale Verwaltungseinheit 25 im Schritt S34 dasjenige Zertifikat Z, das den öffentlichen Schlüssel 20 der Automatisierungseinheit 5 enthält, an den weiteren Automatisierungsserver 11' übermitteln. Alternativ oder zusätzlich kann die zentrale Verwaltungseinheit 25 an den weiteren Automatisierungsserver 11' ein anderes Zertifikat Z übermitteln, das der Automatisierungsserver 11' im Rahmen der Prüfung der Vertrauenskette benötigt, beispielsweise das Zertifikat Z, das ihren eigenen öffentlichen Schlüssel 20 enthält, also den öffentlichen Schlüssel 20 der zentralen Verwaltungseinheit 25.

Nach dem Schritt S34 geht die zentrale Verwaltungseinheit 25 zu einem Schritt S35 über. Im Schritt S35 führt die zentrale Verwaltungseinheit 25 Aufgaben aus, die im Rahmen der vorliegenden Erfindung von untergeordneter Bedeutung sind. Beispielsweise kann die zentrale Verwaltungseinheit 25 Zertifikate Z, deren Ablauf bevorsteht, durch neue Zertifikate Z ersetzen oder ergänzen. Den Schritt S35 führt die zentrale Verwaltungseinheit 25 auch dann aus, wenn das Ereignis des Schrittes S31 nicht eingetreten ist.

FIG 8 umfasst Schritte S41 bis S45. Die Schritte S41, S42 und S45 korrespondieren 1:1 mit den Schritten S31, S32 und S35 von FIG 7. Im Schritt S43 trägt die zentrale Verwaltungseinheit 25 eine Sperre des Zertifikats Z, das der Automatisierungseinheit 5 zugeordnet ist, in die Sperrliste 24 ein. Im Schritt S44 erstellt die zentrale Verwaltungseinheit 25 ein neues Zertifikat Z, das den öffentlichen Schlüssel 20 der Automatisierungseinheit 5 enthält, und übermittelt dieses Zertifikat Z an den weiteren Automatisierungsserver 11'.

Das direkte Sperren durch die Verwaltungseinheit 25 selbst ist möglich, weil im vorliegenden Fall angenommen wird, dass die zentrale Verwaltungseinheit 25 das Zertifikat Z selbst erstellt hat. Alternativ oder zusätzlich kann die zentrale Verwaltungseinheit 25 im Schritt S43 aber auch ein Sperren eines anderen Zertifikats Z veranlassen, das nicht von der Verwaltungseinheit 25 erstellt worden ist. In diesem Fall übermittelt die zentrale Verwaltungseinheit 25 im Schritt S43 eine entsprechende Aufforderung an diejenige Einheit, die das Zertifikat Z erstellt hat.

Im Schritt S44 übermittelt die Verwaltungseinheit 25 an alle Einheiten, die das nunmehr gesperrte Zertifikat Z verwenden, ein entsprechendes neues Zertifikat Z, welches das gesperrte Zertifikat Z ersetzt. Eine Ausnahme bildet in diesem Fall der Automatisierungsserver 11. An den Automatisierungsserver 11 wird das neue Zertifikat Z nicht übermittelt. Das neue Zertifikat Z wird von der zentralen Verwaltungseinheit 25 aber an den weiteren Automatisierungsserver 11' übermittelt. Gegebenenfalls muss die zentrale Verwaltungseinheit 25 - analog zum Schritt S43 - eine entsprechende Aufforderung zur Übermittlung von Zertifikaten Z an andere Einheiten übermitteln.

Unabhängig davon, ob die Vorgehensweise gemäß FIG 7 oder die Vorgehensweise gemäß FIG 8 realisiert wird, unterbindet die zentrale Verwaltungseinheit 25 dadurch die weitere Kommunikation des Automatisierungsservers 11 mit der Automatisierungseinheit 5 und ermöglicht die Kommunikation des weiteren Automatisierungsservers 11' mit der Automatisierungseinheit 5.

Wie bereits erwähnt, erfolgt eine völlig analoge Vorgehensweise auch dann, wenn andere Transfers von Automatisierungseinheiten 4, 4' zu Automatisierungsservern 11, 11' vorgenommen werden sollen. Im Ergebnis teilt die zentrale Verwaltungseinheit 25 somit einem jeweiligen Automatisierungsserver 11, 11' die jeweilige Vertrauenskette nur dann mit, wenn sie zuvor allen anderen Automatisierungsservern 11, 11' zur Kommunikation mit der entsprechenden Automatisierungseinheit 5 bestimmte Vertrauensketten entzogen hat oder entsprechende Zertifikate Z gesperrt hat oder deren Sperre veranlasst hat. Es kann natürlich auch der Fall auftreten, dass diese Zertifikate Z - beispielsweise wegen Zeitablauf - anderweitig ungültig sind. Dies wird im Rahmen der vorliegenden Erfindung durch die Schritte S31 bis S45 mit abgedeckt.

Die zentrale Verwaltungseinheit 25 gibt also bei Bedarf den Zugriff des jeweiligen Automatisierungsservers 11, 11' auf eine bestimmte Automatisierungseinheit 5 frei und sperrt ihn bei Bedarf auch wieder. Die Verwaltungseinheit 25 sorgt hierbei dafür, dass zu einem bestimmten Zeitpunkt maximal ein einziger Automatisierungsserver 11, 11' auf eine bestimmte Automatisierungseinheit 5 zugreifen kann.

Zusammengefasst betrifft die vorliegende Erfindung somit folgenden Sachverhalt:
Ein Automatisierungssystem umfasst zumindest eine Automatisierungseinheit 5 und mehrere Automatisierungsserver 11, 11' sowie eine zentrale Verwaltungseinheit 25, die über ein Kommunikationsnetz 10 miteinander verbunden sind. Die Automatisierungsserver 11, 11' kommunizieren mit der Automatisierungseinheit 5 unter Verwendung eines ihnen mitgeteilten Zertifikats Z der Automatisierungseinheit 5. Zuvor validieren sie jedoch dieses Zertifikat Z. Die Automatisierungseinheit 5 steuert einen Anlagenteil 3 einer industriellen technischen Anlage 1, 1' entsprechend der Kommunikation mit dem jeweiligen Automatisierungsserver 11, 11'. Zur Validierung des Zertifikats Z prüfen die Automatisierungsserver 11, 11' eine Vertrauenskette des jeweiligen Zertifikats Z und durch Zugriff auf eine Sperrliste 24 dessen Gültigkeit. Ein Verweis 23 auf den Speicherort, an dem die Sperrliste 24 gespeichert ist, ist in dem mitgeteilten Zertifikat Z enthalten. Die zentrale Verwaltungseinheit 25 teilt dem jeweiligen Automatisierungsserver 11, 11' zum Ermöglichen der Kommunikation mit der Automatisierungseinheit 5 die jeweilige Vertrauenskette mit. Zum Unterbinden der Kommunikation entzieht sie dem jeweiligen Automatisierungsserver 11, 11' die jeweilige Vertrauenskette oder veranlasst ein Eintragen des Zertifikats Z der Automatisierungseinheit 5 in die Sperrliste 24. Die Mitteilung der jeweiligen Vertrauenskette erfolgt nur dann, wenn zuvor allen anderen Automatisierungsservern 11, 11' die entsprechenden Vertrauensketten entzogen sind, entsprechende Zertifikate Z in die Sperrliste 24 eingetragen sind oder das Zertifikat Z anderweitig ungültig ist.

Die vorliegende Erfindung beruht also auf der Erkenntnis, dass es ausreicht, die Zertifikate Z, welche die Automatisierungsserver 11, 11' zur Realisierung der Kommunikation mit der Automatisierungseinheit 5 benötigen, auf geeignete Art und Weise zu verwalten. Zum einen (FIG 7) ist es möglich, dass die zentrale Verwaltungseinheit 25 selbst Zertifikate Z in einen Speicher schreiben oder aus dem Speicher löschen kann, wobei der entsprechende Automatisierungsserver 11, 11' zur Validierung der Vertrauenskette auf diesen Speicher zugreift. Alternativ ist es möglich, dass die zentrale Verwaltungseinheit 25 Zertifikate Z zwar verteilen, aber nicht wieder löschen kann. In diesem Fall veranlasst sie einen entsprechenden Eintrag in der Sperrliste 24. Danach kann das entsprechende Zertifikat Z nicht mehr verwendet werden. In beiden Fällen ist es nicht erforderlich, die Parametrierung P, P' der Automatisierungsserver 11, 11' zu ändern. Diese kann vielmehr vorab einmalig erstellt werden und braucht danach nicht mehr geändert werden. Die Automatisierungsserver 11, 11' haben daher dauerhaft die Information, welche Anlagenteile 2, 3, 2' (genauer: aus Sicht des jeweiligen Automatisierungsservers 11, 11' welche Automatisierungseinheiten 4, 4', 5) vorhanden sein müssen, um die jeweilige Automatisierungsaufgabe auszuführen. Die Parametrierung der Automatisierungsserver 11, 11' kann somit unabhängig von der Mitteilung von Vertrauensketten, dem Entzug von Vertrauensketten und dem Sperren von Zertifikaten Z erfolgen. Dennoch wird eine im jeweiligen Kontext unerwünschte Kommunikation zuverlässig vermieden.

### Bezugszeichenliste

- 1, 1': industrielle technische Anlage
- 2, 2' 3: Anlagenteile
- 4, 4', 5: Automatisierungseinheiten
- 6, 6', 7, 12, 12', 26: Programme
- 8, 8', 9, 13, 13', 27: Maschinencode
- 10: Kommunikationsnetz
- 11, 11': Automatisierungsserver
- 14, 14': Engineering-Server
- 15: Name
- 16: Identifikator
- 17: Angabe über Verwendungszweck
- 18, 19: Zeitpunkte
- 20: öffentlicher Schlüssel
- 21: Signatur
- 22: Angabe zu signierender Einheit
- 23: Verweis auf Speicherort
- 24: Widerrufsliste
- 25: zentrale Verwaltungseinheit

- P, P': Parametrierungen
- S1 bis S45: Schritte
- Z: Zertifikate

## Patentansprüche

1. Betriebsverfahren für ein Automatisierungssystem,
- wobei das Automatisierungssystem zumindest eine Automatisierungseinheit (5) und mehrere Automatisierungsserver (11, 11') umfasst,
- wobei die Automatisierungsserver (11, 11') über ein Kommunikationsnetz (10) mit der Automatisierungseinheit (5) verbunden sind,
- wobei die Automatisierungsserver (11, 11') mit der Automatisierungseinheit (5) unter Verwendung eines ihnen mitgeteilten Zertifikats (Z) der Automatisierungseinheit (5) kommunizieren,
- wobei die Automatisierungsserver (11, 11') vor dem Kommunizieren mit der Automatisierungseinheit (5) das Zertifikat (Z) der Automatisierungseinheit (5) validieren,
- wobei die Automatisierungseinheit (5) einen Anlagenteil (3) einer industriellen technischen Anlage (1, 1') entsprechend der Kommunikation mit dem jeweiligen Automatisierungsserver (11, 11') steuert,
- wobei die Automatisierungsserver (11, 11') zur Validierung des Zertifikats (Z) zum einen eine Vertrauenskette des Zertifikats (Z) prüfen und zum anderen durch Zugriff auf eine Sperrliste (24) eine Gültigkeit des Zertifikats (Z) prüfen,
- wobei die Sperrliste (24) an einem Speicherort gespeichert ist und ein Verweis (23) auf den Speicherort in dem mitgeteilten Zertifikat (Z) enthalten ist,
**dadurch gekennzeichnet ,**
- **dass** das Automatisierungssystem zusätzlich eine zentrale Verwaltungseinheit (25) umfasst, die über das Kommunikationsnetz (10) mit den Automatisierungsservern (11, 11') und der Automatisierungseinheit (5) verbunden ist,
- **dass** die zentrale Verwaltungseinheit (25) zum Ermöglichen der Kommunikation des jeweiligen Automatisierungsservers (11, 11') mit der Automatisierungseinheit (5) dem jeweiligen Automatisierungsserver (11, 11') die jeweilige Vertrauenskette mitteilt,
- **dass** die zentrale Verwaltungseinheit (25) zum Unterbinden der Kommunikation eines jeweiligen Automatisierungsservers (11, 11') mit der Automatisierungseinheit (5) dem jeweiligen Automatisierungsserver (11, 11') die jeweilige Vertrauenskette entzieht oder ein Eintragen eines bis zu diesem Zeitpunkt gültigen Zertifikats (Z) der Automatisierungseinheit (5) in die Sperrliste (24) veranlasst und
- **dass** die zentrale Verwaltungseinheit (25) einem jeweiligen Automatisierungsserver (11, 11') die jeweilige Vertrauenskette nur dann mitteilt, wenn sie zuvor allen anderen Automatisierungsservern (11, 11') zur Kommunikation mit der Automatisierungseinheit (5) bestimmte Vertrauensketten entzogen hat oder das Eintragen eines bis zu diesem Zeitpunkt gültigen Zertifikats (Z) der Automatisierungseinheit (5) in die Sperrliste (24) veranlasst hat oder das Zertifikat (Z) der Automatisierungseinheit (5) anderweitig ungültig ist.

2. Betriebsverfahren nach Anspruch 1,
**dadurch gekennzeichnet ,**
**dass** die Automatisierungsserver (11, 11') anhand einer jeweiligen Parametrierung ermitteln, ob sie zur Ausführung einer für sie spezifischen Automatisierungsaufgabe mit der Automatisierungseinheit (5) kommunizieren müssen, und dass die Parametrierung (P, P') der Automatisierungsserver (11, 11') unabhängig von der Mitteilung und dem Entzug von Vertrauensketten und dem Sperren von Zertifikaten (Z) erfolgt.

3. Betriebsverfahren nach Anspruch 1 oder 2,
**dadurch gekennzeichnet ,**
- **dass** zum Erhalten einer jeweiligen Vertrauenskette der jeweilige Automatisierungsserver (11, 11') die Zuordnung der Automatisierungseinheit (5) bei der zentralen Verwaltungseinheit (25) anfordert und
- **dass** die zentrale Verwaltungseinheit (25) aufgrund der Anforderung den Entzug der Vertrauenskette eines einem anderen Automatisierungsserver (11, 11') mitgeteilten Zertifikats (Z) der Automatisierungseinheit (5) vornimmt oder das Sperren eines einem anderen Automatisierungsserver (11, 11') mitgeteilten Zertifikats (Z) der Automatisierungseinheit (5) veranlasst und die Mitteilung der jeweiligen Vertrauenskette an den anfordernden Automatisierungsserver (11, 11') vornimmt.

4. Automatisierungssystem,
- wobei das Automatisierungssystem zumindest eine Automatisierungseinheit (5) und mehrere Automatisierungsserver (11, 11') umfasst,
- wobei die Automatisierungsserver (11, 11') über ein Kommunikationsnetz (10) mit der Automatisierungseinheit (5) verbunden sind,
- wobei die Automatisierungsserver (11, 11') derart programmiert sind, dass sie mit der Automatisierungseinheit (5) unter Verwendung eines ihnen mitgeteilten Zertifikats (Z) der Automatisierungseinheit (5) kommunizieren und vor dem Kommunizieren mit der Automatisierungseinheit (5) das Zertifikat (Z) der Automatisierungseinheit (5) validieren,
- wobei die Automatisierungseinheit (11, 11') derart programmiert ist, dass sie einen Anlagenteil (3) einer industriellen technischen Anlage (1, 1') entsprechend der Kommunikation mit dem jeweiligen Automatisierungsserver (11, 11') steuert,
- wobei die Automatisierungsserver (11, 11') weiterhin derart programmiert sind, dass sie zur Validierung des Zertifikats (Z) zum einen eine Vertrauenskette des Zertifikats (Z) prüfen und zum anderen durch Zugriff auf eine Sperrliste (24) eine Gültigkeit des Zertifikats (Z) prüfen,
- wobei die Sperrliste (24) an einem Speicherort gespeichert ist und ein Verweis (23) auf den Speicherort in dem mitgeteilten Zertifikat (Z) enthalten ist,
**dadurch gekennzeichnet ,**
- **dass** das Automatisierungssystem zusätzlich eine zentrale Verwaltungseinheit (25) umfasst, die über das Kommunikationsnetz (10) mit den Automatisierungsservern (11, 11') und der Automatisierungseinheit (5) verbunden ist,
- **dass** die zentrale Verwaltungseinheit (25) derart programmiert ist, dass sie
-- zum Ermöglichen der Kommunikation des jeweiligen Automatisierungsservers (11, 11') mit der Automatisierungseinheit (5) dem jeweiligen Automatisierungsserver (11, 11') die jeweilige Vertrauenskette mitteilt,
-- zum Unterbinden der Kommunikation eines jeweiligen Automatisierungsservers (11, 11') mit der Automatisierungseinheit (5) dem jeweiligen Automatisierungsserver (11, 11') die jeweilige Vertrauenskette entzieht oder ein Eintragen des jeweiligen Zertifikats (Z) in die Sperrliste (24) veranlasst und
-- einem jeweiligen Automatisierungsserver (11, 11') die jeweilige Vertrauenskette nur dann mitteilt, wenn sie zuvor allen anderen Automatisierungsservern (11, 11') zur Kommunikation mit der Automatisierungseinheit (5) bestimmte Vertrauensketten entzogen hat oder ein Eintragen eines bis zu diesem Zeitpunkt gültigen Zertifikats (Z) der Automatisierungseinheit (5) in die Sperrliste (24) veranlasst hat oder das Zertifikat (Z) der Automatisierungseinheit anderweitig ungültig ist.

5. Automatisierungssystem nach Anspruch 4,
**dadurch gekennzeichnet ,**
**dass** die Automatisierungsserver (11, 11') derart programmiert sind, dass sie anhand einer jeweiligen Parametrierung ermitteln, ob sie zur Ausführung einer für sie spezifischen Automatisierungsaufgabe mit der Automatisierungseinheit (5) kommunizieren müssen, und dass die Parametrierung (P, P') der Automatisierungsserver (11, 11') unabhängig von der Mitteilung und dem Entzug von Vertrauensketten und dem Sperren von Zertifikaten (Z) erfolgt.

6. Automatisierungssystem nach Anspruch 4 oder 5,
**dadurch gekennzeichnet ,**
- **dass** die Automatisierungsserver (11, 11') derart programmiert sind, dass sie zum Erhalten einer jeweiligen Vertrauenskette die Zuordnung der Automatisierungseinheit (5) bei der zentralen Verwaltungseinheit (25) anfordern, und
- **dass** die zentrale Verwaltungseinheit (25) derart programmiert ist, dass sie aufgrund der Anforderung den Entzug der Vertrauenskette eines einem anderen Automatisierungsserver (11, 11') mitgeteilten Zertifikats (Z) der Automatisierungseinheit (5) vornimmt oder das Sperren eines einem anderen Automatisierungsserver (11, 11') mitgeteilten Zertifikats (Z) der Automatisierungseinheit (5) veranlasst und die Mitteilung der jeweiligen Vertrauenskette an den anfordernden Automatisierungsserver (11, 11') vornimmt.

## Claims

1. Operating method for an automation system,
- wherein the automation system comprises at least one automation unit (5) and a plurality of automation servers (11, 11'),
- wherein the automation servers (11, 11') are connected to the automation unit (5) via a communication network (10),
- wherein the automation servers (11, 11') communicate with the automation unit (5) using a certificate (Z) of the automation unit (5) which has been communicated to them,
- wherein the automation servers (11, 11') validate the certificate (Z) of the automation unit (5) prior to communication with the automation unit (5),
- wherein the automation unit (5) controls an installation part (3) of an industrial technical installation (1, 1') according to the communication with the respective automation server (11, 11'),
- wherein the automation servers (11, 11'), in order to validate the certificate (Z), on the one hand check a chain of trust of the certificate (Z) and on the other hand check a validity of the certificate (Z) by accessing a black list (24),
- wherein the black list (24) is stored at a storage location and a reference (23) to the storage location is contained in the communicated certificate (Z),
**characterised in that**
- the automation system additionally comprises a central management unit (25), which is connected to the automation servers (11, 11') and the automation unit (5) via the communication network (10),
- the central management unit (25), in order to enable the communication of the respective automation server (11, 11') with the automation unit (5), communicates the respective chain of trust to the respective automation server (11, 11'),
- the central management unit (25), in order to prevent the communication of a respective automation server (11, 11') with the automation unit (5), revokes the respective chain of trust from the respective automation server (11, 11') or prompts a certificate (Z) of the automation unit (5), which has been valid until this point in time, to be entered into the black list (24) and
- the central management unit (25) only communicates the respective chain of trust to a respective automation server (11, 11') when it has revoked all chains of trust determined for communication with the automation unit (5) from all other automation servers (11, 11') beforehand, or has prompted a certificate (Z) of the automation unit (5), which has been valid until this point in time, to be entered into the black list (24), or the certificate (Z) of the automation unit (5) is otherwise invalid.

2. Operating method according to claim 1,
**characterised in that**
the automation servers (11, 11') ascertain, on the basis of a respective parameterisation, whether they have to communicate with the automation unit (5) in order to carry out an automation task specific to them, and that the parameterisation (P, P') of the automation servers (11, 11') takes place independently of the communication and the revocation of chains of trust and the blocking of certificates (Z) .

3. Operating method according to claim 1 or 2,
**characterised in that**
- in order to obtain a respective chain of trust, the respective automation server (11, 11') requests the allocation of the automation unit (5) at the central management unit (25) and
- the central management unit (25), on the basis of the request, undertakes the revocation of the chain of trust of a certificate (Z) of the automation unit (5) communicated to another automation server (11, 11'), or prompts the blocking of a certificate (Z) of the automation unit (5) communicated to another automation server (11, 11') and undertakes the communication of the respective chain of trust to the requesting automation servers (11, 11').

4. Automation system,
- wherein the automation system comprises at least one automation unit (5) and a plurality of automation servers (11, 11'),
- wherein the automation servers (11, 11') are connected to the automation unit (5) via a communication network (10),
- wherein the automation servers (11, 11') are programmed in such a way that they communicate with the automation unit (5) using a certificate (Z) of the automation unit (5) which has been communicated to them, and validate the certificate (Z) of the automation unit (5) prior to communication with the automation unit (5),
- wherein the automation unit (11, 11') is programmed in such a way that it controls an installation part (3) of an industrial technical installation (1, 1') according to the communication with the respective automation server (11, 11'),
- wherein the automation servers (11, 11') are furthermore programmed in such a way that, in order to validate the certificate (Z), they on the one hand check a chain of trust of the certificate (Z) and on the other hand check a validity of the certificate (Z) by accessing a black list (24),
- wherein the black list (24) is stored at a storage location and a reference (23) to the storage location is contained in the communicated certificate (Z),
**characterised in that**
- the automation system additionally comprises a central management unit (25), which is connected to the automation servers (11, 11') and the automation unit (5) via the communication network (10),
- the central management unit (25) is programmed in such a way that,
-- in order to enable the communication of the respective automation server (11, 11') with the automation unit (5), it communicates the respective chain of trust to the respective automation server (11, 11'),
-- in order to prevent the communication of a respective automation server (11, 11') with the automation unit (5), it revokes the respective chain of trust from the respective automation server (11, 11') or prompts the respective certificate (Z) to be entered into the black list (24) and
-- it only communicates the respective chain of trust to a respective automation server (11, 11') when it has revoked all chains of trust determined for communication with the automation unit (5) from all other automation servers (11, 11') beforehand, or has prompted a certificate (Z) of the automation unit (5), which has been valid until this point in time, to be entered into the black list (24), or the certificate (Z) of the automation unit is otherwise invalid.

5. Automation system according to claim 4,
**characterised in that**
the automation servers (11, 11') are programmed in such a way that they ascertain, on the basis of a respective parameterisation, whether they have to communicate with the automation unit (5) in order to carry out an automation task specific to them, and that the parameterisation (P, P') of the automation servers (11, 11') takes place independently of the communication and the revocation of chains of trust and the blocking of certificates (Z).

6. Automation system according to claim 4 or 5,
**characterised in that**
- the automation servers (11, 11') are programmed in such a way that, in order to obtain a respective chain of trust, they request the allocation of the automation unit (5) at the central management unit (25), and
- the central management unit (25) is programmed in such a way that, on the basis of the request, it undertakes the revocation of the chain of trust of a certificate (Z) of the automation unit (5) communicated to another automation server (11, 11'), or prompts the blocking of a certificate (Z) of the automation unit (5) communicated to another automation server (11, 11') and undertakes the communication of the respective chain of trust to the requesting automation servers (11, 11').

## Revendications

1. Procédé pour faire fonctionner un système d'automatisation,
- dans lequel système d'automatisation comprend au moins une unité (5) d'automatisation et plusieurs serveurs (11, 11') d'automatisation,
- dans lequel les serveurs (11, 11') d'automatisation sont reliés à l'unité (5) d'automatisation par un réseau (10) de communication,
- dans lequel les serveurs (11, 11') d'automatisation communiquent avec l'unité (5) d'automatisation en utilisant un certificat (Z), qui leur est communiqué, de l'unité (5) d'automatisation,
- dans lequel les serveurs (11, 11') d'automatisation valident avant la communication avec l'unité (5) d'automatisation le certificat (Z) de l'unité (5) d'automatisation,
- dans lequel l'unité (5) d'automatisation commande une partie (3) d'une installation (1, 1') technique industrielle conformément à la communication avec le serveur (11, 11') d'automatisation respectif,
- dans lequel pour la validation du certificat (Z) les serveurs (11, 11') d'automatisation d'une part contrôle une chaîne de confiance du certificat (Z) et d'autre part contrôle une validité du certificat (Z) en accédant à une liste (24) de blocage,
- dans lequel la liste (24) de blocage est mise en mémoire en un emplacement de mémoire et un renvoi (23) à l'emplacement de mémoire est contenu dans le certificat (Z) communiqué,
**caractérisé,**
- **en ce que** le système d'automatisation comprend en outre une unité (25) centrale de gestion, qui est reliée aux serveurs (11, 11') d'automatisation et à l'unité (5) d'automatisation par le réseau (10) de communication,
- **en ce que** l'unité (25) centrale de gestion communique pour rendre possible la communication du serveur (11, 11') d'automatisation respectif avec l'unité (5) d'automatisation, la chaîne de confiance respective au serveur (11, 11') d'automatisation respectif,
- **en ce que** l'unité (25) centrale de gestion retire, pour supprimer la communication d'un serveur (11, 11') d'automatisation respectif avec l'unité (5) d'automatisation, la chaîne de confiance respective du serveur (11, 11') d'automatisation respectif ou provoque une inscription d'un certificat (Z), valable jusqu'à cet instant, de l'unité (5) d'automatisation dans la liste (24) de blocage et
- **en ce que** l'unité (25) centrale de gestion ne communique à un serveur (11, 11') respectif d'automatisation la chaîne de confiance respective que si auparavant elle a retiré de tous les autres serveurs (11, 11') d'automatisation des chaînes de confiance destinées à la communication avec l'unité (5) d'automatisation ou que si elle a provoqué l'inscription d'un certificat (Z), valable jusqu'à cet instant, de l'unité (5) d'automatisation dans la liste (24) de blocage ou que si le certificat (Z) de l'unité (5) d'automatisation est invalidé d'une autre façon.

2. Procédé suivant la revendication 1,
**caractérisé**
**en ce que** les serveurs (11, 11') d'automatisation déterminent à l'aide d'une paramétrage respectif s'ils doivent, pour l'exécution d'une tâche d'automatisation qui leur est spécifique, communiquer avec l'unité (5) d'automatisation et en ce que le paramétrage (P, P') des serveurs (11, 11') d'automatisation s'effectue indépendamment de la communication et du retrait de la chaîne de confiance et du blocage de certificats (Z).

3. Procédé suivant la revendication 1 ou 2,
**caractérisé**
- **en ce que** pour obtenir une chaîne de confiance respective, le serveur (11, 11') d'automatisation respectif demande auprès de l'unité (25) centrale de gestion l'affectation de l'unité (5) d'automatisation et
- **en ce que** l'unité (25) centrale de gestion effectue sur la base de la demande le retrait de la chaîne de confiance d'un certificat (Z), communiqué à un autre serveur (11, 11') d'automatisation, de l'unité (5) d'automatisation ou provoque le blocage d'un certificat (Z), communiqué à un autre serveur (11, 11') d'automatisation, de l'unité (5) d'automatisation et effectue la communication de la chaîne de confiance respective au serveur (11, 11') d'automatisation demandeur.

4. Système d'automatisation
- dans lequel système d'automatisation comprend au moins une unité (5) d'automatisation et plusieurs serveurs (11, 11') d'automatisation,
- dans lequel les serveurs (11, 11') d'automatisation sont reliés à l'unité (5) d'automatisation par un réseau (10) de communication,
- dans lequel les serveurs (11, 11') d'automatisation sont programmés de manière à communiquer avec l'unité (5) d'automatisation en utilisant un certificat (Z), qui leur est communiqué, de l'unité (5) d'automatisation et à valider, avant la communication avec l'unité (5) d'automatisation, le certificat (Z) de l'unité (5) d'automatisation,
- dans lequel l'unité (11, 11') d'automatisation est programmée de manière à commander une partie (3) d'une installation (1, 1') technique industrielle conformément à la communication avec le serveur (11, 11') d'automatisation respectif,
- dans lequel les serveurs (11, 11') d'automatisation sont en outre programmés de manière à, pour la validation du certificat (Z), d'une part contrôler une chaîne de confiance du certificat (Z) et d'autre part contrôler une validité du certificat (Z) en accédant à une liste (24) de blocage,
- dans lequel la liste (24) de blocage est mise en mémoire en un emplacement de mémoire et un renvoi (23) à l'emplacement de mémoire est contenu dans le certificat (Z) communiqué,
**caractérisé**
- **en ce que** le système d'automatisation comprend en outre une unité (25) centrale de gestion, qui est reliée aux serveurs (11, 11') d'automatisation et à l'unité (5) d'automatisation par le réseau (10) de communication,
- **en ce que** l'unité (25) centrale de gestion est programmée de manière
-- à ce qu'elle communique, pour rendre possible la communication au serveur (11, 11') d'automatisation respectif avec l'unité (5) d'automatisation, la chaîne de confiance respective au serveur (11, 11') d'automatisation respectif,
-- en ce qu'elle retire, pour la suppression de la communication d'un serveur (11, 11') d'automatisation respectif avec l'unité (5) d'automatisation, la chaîne de confiance respective du serveur (11, 11') d'automatisation respectif ou provoque une inscription du certificat (Z) respectif dans la liste (24) de blocage et
-- ne communique à un serveur (11, 11') d'automatisation respectif la chaîne de confiance respective que si auparavant elle a retiré de tous les autres serveurs (11, 11') d'automatisation des chaînes de confiance destinées à la communication avec l'unité (5) d'automatisation ou que si elle a provoqué l'inscription d'un certificat (Z), valable jusqu'à cet instant, de l'unité (5) d'automatisation dans la liste (24) de blocage ou que si le certificat (Z) de l'unité (5) d'automatisation est invalidée d'une autre façon.

5. Système d'automatisation suivant la revendication 4,
**caractérisé**
**en ce que** les serveurs (11, 11') d'automatisation sont programmés de manière à déterminer à l'aide d'un paramétrage respectif s'ils doivent, pour l'exécution d'une tâche d'automatisation spécifique, communiquer avec l'unité (5) d'automatisation et en ce que le paramétrage (P, P') des serveurs (11, 11') d'automatisation s'effectue indépendamment de la communication et du retrait de chaînes de confiance et du blocage de certificats (Z).

6. Système d'automatisation suivant la revendication 4 ou 5,
**caractérisé**
- **en ce que** les serveurs (11, 11') d'automatisation sont programmés de manière à demander, pour l'obtention d'une chaîne de confiance respective, auprès de l'unité (25) centrale de gestion l'affectation de l'unité (5) d'automatisation, et
- **en ce que** l'unité (25) centrale de gestion est programmée de manière à effectuer sur la base de la demande le retrait de la chaîne de confiance d'un certificat (Z), communiqué à un autre serveur (11, 11') d'automatisation, de l'unité (5) d'automatisation ou à provoquer le blocage d'un certificat (Z), communiqué à un autre serveur (11, 11') d'automatisation, de l'unité (5) d'automatisation et à effectuer la communication de la chaîne de confiance respective au serveur (11, 11') d'automatisation demandeur.
